# EUROPÄISCHE PATENTSCHRIFT

(11) **EP 1 455 124 B1**
(45) Veröffentlichungstag und Bekanntmachung des Hinweises auf die Patenterteilung: **21.12.2005**
(21) Anmeldenummer: 04005205.2
(22) Anmeldetag: 04.03.2004
(51) Int. Cl.: F16K 1/226

(54) **Klappenventil**
Butterfly valve
Vanne papillon

(30) Priorität: 06.03.2003 DE 10310039
(43) Veröffentlichungstag der Anmeldung: 08.09.2004
(73) Patentinhaber: G. Kromschröder Aktiengesellschaft, D-49074 Osnabrück (DE)
(72) Erfinder: Middendorp, Jürgen, 49134 Wallenhorst (DE); Petersmann, Martin, 49086 Osnabrück (DE)
(74) Vertreter: Harlacher, Mechthild

(56) Entgegenhaltungen:
- DE-A- 10 155 940
- FR-A- 2 482 236
- US-A- 3 008 685
- PATENT ABSTRACTS OF JAPAN vol. 006, no. 220 (M-169), 5. November 1982 (1982-11-05) & JP 57 124165 A (KUBOTA TEKKO KK), 2. August 1982 (1982-08-02)
- PATENT ABSTRACTS OF JAPAN vol. 1996, no. 09, 30. September 1996 (1996-09-30) & JP 08 128538 A (KUBOTA CORP), 21. Mai 1996 (1996-05-21)

## Beschreibung

Die Erfindung betrifft eine Armatur zum Absperren oder Verstellen des Volumenstromes eines gasförmigen oder flüssigen Mediums mit einer Klappe, die mittels einer Spindel zwischen einer Offenstellung und einer Schließstellung schwenkbar ist und mit einem Durchflusskörper, der eine Durchflussöffnung begrenzt und der mindestens eine Anschlagkante aufweist, auf der die Klappe in der Schließstellung aufliegt, wobei die Klappe ein biegesteifes Element und ein elastisches Federblech aufweist, welches federnd vorgespannt ist und welches in der Schließstellung abdichtend auf der Anschlagkante aufliegt.

Aus der DE 101 55 940 ist eine Klappe zur Verwendung in Rauchgas- oder Luftkanälen bekannt. Ein schwenkbarer Klappenteller weist einen ersten starren Dichtrand und einen elastischen Dichtrand auf, wobei letzterer von einer Blechleiste aus Federstahl gebildet wird. Rauchgas- und Luftkanäle haben große Nennweiten und die Klappe ist konstruktiv bedingt relativ platzaufwändig.

Gattungsgemäße Armaturen werden insbesondere in Luft- oder Gaszufuhrleitungen zu Verbrennungseinrichtungen eingesetzt.

Ein maßgebliches Kriterium für solche Armaturen ist der Leckvolumenstrom, der in der Schließstellung durch die Durchflussöffnung strömt. Um einen möglichst geringen Leckvolumenstrom zu erreichen, können Armaturen mit anschlagenden Klappen verwendet werden. Bei derartigen Armaturen liegt die Klappe in der Schließstellung allseitig auf einer Anschlagkante im Durchflusskörper auf. Der Schwenkwinkel der Klappe zwischen der Schließstellung und der Offenstellung beträgt ca. 90°.

Die Fertigung, Montage und Justierung derartiger Armaturen ist besonders aufwendig, wenn der Leckvolumenstrom möglichst gering sein soll. Problematisch ist insbesondere die Abstimmung der Fertigungstoleranzen der beidseitigen Anschläge mit der Klappe.

Die Aufgabe der Erfindung besteht demgemäss darin, eine Armatur mit möglichst geringem Leckvolumenstrom zu schaffen, die einfach zu fertigen und zu montieren ist.

Diese Aufgabe wird durch eine gattungsgemäße Armatur dadurch gelöst, dass das Federblech beidseitig entlang seiner Schwenkachse eine erste und eine zweite Federblechhälfte aufweist, die im wesentlichen halbkreisförmig sind und unterschiedliche Radien aufweisen.

Ein Federblech übernimmt mittels Vorspannung beidseitig die Dichtfunktion. Wenn ein temperaturbeständiges Federblech verwendet wird, ist die Armatur sowohl für heiße als auch für kalte Medien geeignet. Das Federblech übernimmt außerdem die Funktion des Toleranz-, Mittel- und Winkelversatzausgleiches. Somit ist bei der Montage keine aufwendige Justage erforderlich.

Dadurch, dass das Federblech in Schwenkrichtung, d. h. beidseitig seiner Schwenkachse eine erste und eine zweite Klappenhälfte aufweist, die im wesentlichen halbkreisförmig sind und deren Radien unterschiedlich groß sind wird gewährleistet, dass die Klappe zwischen der Offenstellung und der Schließstellung schwenkbar ist.

Auf besonders vorteilhafte Weise ist das Federblech anströmseitig und das biegesteife Element abströmseitig angeordnet. Bei dieser Ausführungsform unterstützt der Vordruck verstärkt die Dichtwirkung.

Vorzugsweise ist das biegesteife Element als Klappenscheibe ausgebildet. Die Klappenscheibe stützt das Federblech gegen die verformende Wirkung des strömenden Mediums. Der Querschnitt der Klappenscheibe entspricht im wesentlichen dem Querschnitt des Federbleches. Die Klappenscheibe dient außerdem dazu das Federblech vorzuspannen.

Eine besonders vorteilhafte Weiterbildung der Erfindung besteht darin, dass die Spindel in Strömungsrichtung beabstandet zu der von der Klappe und der Anschlagkante gebildeten Dichtebene radial durch den Durchflusskörper hindurch geführt wird. Dem entsprechend verläuft die Spindel bzw. die Drehachse der Klappe in Strömungsrichtung vor oder hinter der Klappe, d. h. außerhalb der Dichtebene, so dass eine über den gesamten Umfang durchgehende metallische Dichtfläche erzeugt wird. Vorteilhaft ist weiterhin, dass die Verbindung zwischen Spindel und Klappe nicht abgedichtet werden muss.

Vorzugsweise ist die Spindel mit der Klappe mittels eines Distanzstückes verbunden, insbesondere verschraubt. Das Distanzstück erstreckt sich radial zur Spindel und bildet mit der Klappe einen im wesentlichen rechten Winkel.

Erfindungsgemäß wird die Klappe hinsichtlich der Durchflussöffnung mittels mindestens eines Zentrierstiftes zentriert, der in die Klappe und das Distanzstück eingesteckt wird. Der Montageaufwand verringert sich, weil eine Justage entfallen kann. Nach einem weiteren vorteilhaften Merkmal der Erfindung ist die Armatur dadurch gekennzeichnet, dass das Federblech wenigstens einseitig umfangseitig in Richtung auf die Anschlagkante abgewinkelt ist. Durch diese Formgebung wird die Dichtwirkung weiter verbessert. Es reicht aus, wenn der Grad der Abwinkelung gering ist.

Um eine Bewegung der beiden unterschiedlich großen Federblechhälften gegeneinander zu ermöglichen weist das Federblech zwischen den beiden Federblechhälften jeweils einen Schlitz auf, der vorzugsweise in einer Bohrung endet. Diese soll verhindern, dass das Federblech bei einer Bewegung der beiden Federblechhälften relativ zueinander einreißt.

Die Erfindung wird im Folgenden anhand eines bevorzugten Ausführungsbeispiels der erfindungsgemäßen Armatur im Zusammenhang mit der Zeichnung näher erläutert.

Die Zeichnung zeigt in:
- Fig. 1: eine Ansicht der Armatur in Strömungsrichtung;
- Fig. 2: einen Schnitt längs der Linie A-A in Fig. 1.

Bei dem Ausführungsbeispiel handelt es sich um eine Armatur zum Einstellen des Verbrennungsluftstromes in einer nicht dargestellten Luftleitung, die zu einer Verbrennungseinrichtung führt.

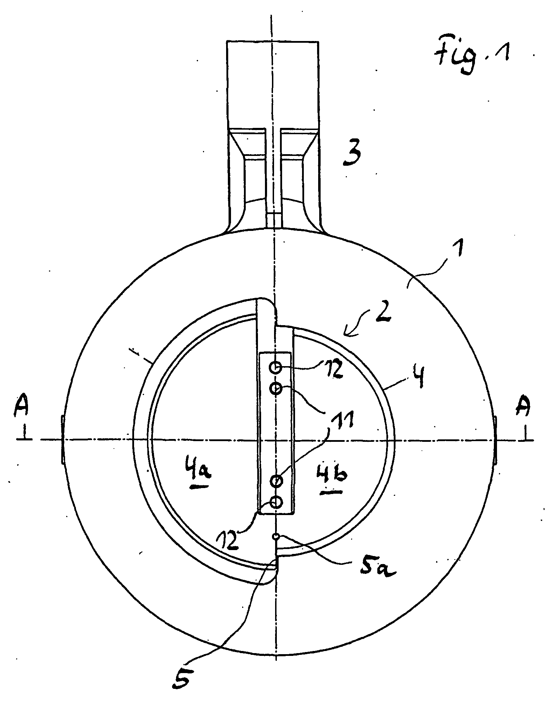

Fig. 1 zeigt eine Ansicht auf die Armatur in Strömungsrichtung der Luft. Einem Durchflusskörper 1 ist eine Klappe 2 zugeordnet, die mittels einer Spindel 3 um ca. 90 ° zwischen einer Offenstellung und einer Schließstellung schwenkbar ist.

Die Klappe 2 weist anströmseitig ein elastisches Federblech 4 auf. Das Federblech 4 weist beidseitig seiner Schwenkachse eine erste und eine zweite Federblechhälfte 4a,b auf, die im wesentlichen halbkreisförmig sind und unterschiedliche Radien aufweisen.

Um eine Bewegung der beiden unterschiedlich großen Federblechhälften 4 a, b gegeneinander zu ermöglichen, weist das Federblech 4 zwischen den beiden Federblechhälften 4a,b jeweils einen Schlitz 5 auf, der in einer Bohrung 5a endet. Die Bohrung 5a soll verhindern, dass das Federblech 4 bei einer Bewegung der beiden Federblechhälften 4a, b relativ zueinander, einreißt.

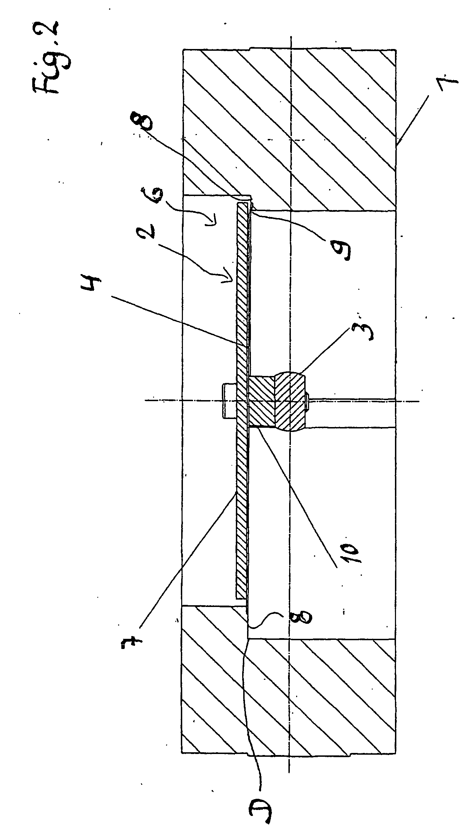

In Fig. 2 ist dargestellt, dass der Durchflusskörper 1 eine Durchflussöffnung 6 begrenzt und jeweils im Schwenkweg an die Querschnittsgestaltung des Federbleches 4 angepasst ist, so dass eine ungehinderte Schwenkbewegung möglich ist.

Die Klappe 2 weist abströmseitig ein biegesteifes Element 7 in Form einer Klappenscheibe auf. Der Querschnitt der Klappenscheibe 7 ist an den Querschnitt des Federbleches 4 angepasst, wobei der Randbereich der Federblechhälfte 4a teilweise nicht von der Klappenscheibe überdeckt wird.

Das Federblech 4 ist federnd vorgespannt und liegt in der Schließstellung abdichtend auf beidseitigen Anschlagkanten 8 im Durchflusskörper 1 auf.

Die linke Federblechhälfte 4a mit dem größeren Radius liegt mit seiner Oberseite auf der Anschlagkante 8 auf und wird von der Luft gegen die Anschlagkante 8 gepresst. In der Schließstellung wird von der Spindel 3 ein Drehmoment auf die zweite Klappenhälfte 4b übertragen. Dabei reicht es aus, wenn der Motor steht und schließt. Durch die Hebelwirkung wird die Dichtwirkung verstärkt. Da das Federblech 4 anströmseitig angeordnet ist, verstärkt der Vordruck die Abdichtung.

Die zweite Federblechhälfte 4b mit dem kleineren Radius ist umfangseitig im Randbereich 9 in Richtung auf die Anschlagkante 8 abgewinkelt. Durch diese Formgebung wird die Abdichtung weiter verbessert. Dabei reicht es aus, wenn der Grad der Abwinkelung relativ gering ist.

Die Spindel 3 zum Schwenken der Klappe 2 wird in Strömungsrichtung beabstandet zur Klappe 2 auf nicht dargestellte Weise radial durch den Durchflusskörper 1 hindurchgeführt und ist auf bekannte Weise mit einem Antrieb, z. B. einem Elektromotor verbunden. Indem die Spindel 3 und damit die Drehachse der Klappe 2 stromauf der zwischen der Klappe 2 und der Anschlagkante 8 gebildeten Dichtebene D positioniert ist, wird eine über den Querschnitt durchgehende metallische Dichtfläche erzeugt. Vorteilhaft ist, dass die Verbindung zwischen Spindel und Klappe nicht abgedichtet werden muss.

In Fig. 1 ist zu erkennen, dass die Klappe 2 mit der Spindel 3 mittels eines Distanzstückes 10, das mit der Klappe 2 und der Spindel 3 einen im wesentlichen Winkel bildet, mit Hilfe von zwei Schrauben 11 verschraubt ist.

Erfindungsgemäß wird die Klappe 2 hinsichtlich der Durchflussöffnung 6 mittels zwei Zentrierstiften 12 zentriert, die in entsprechende Bohrungen in der Klappe 2, dem Distanzstück 10 und der Spindel 3 eingesteckt werden. Der Montageaufwand verringert sich, weil eine Justage entfallen kann.

Im Rahmen der Erfindung sind ohne weiteres Abwandlungsmöglichkeiten gegeben. So können anstatt der Klappenscheibe geeignete Verstärkungsstreben verwendet werden.

## Patentansprüche

1. Armatur zum Absperren oder Verstellen des Volumenstromes eines gasförmigen oder flüssigen Mediums mit einer Klappe (2), die mittels einer Spindel (3) zwischen einer Offenstellung und einer Schließstellung schwenkbar ist und mit einem Durchflusskörper (1), der eine Durchflussöffnung (6) begrenzt und der mindestens eine Anschlagkante (8) aufweist, auf der die Klappe in der Schließstellung aufliegt, wobei die Klappe (2) ein biegesteifes Element (7) und ein elastisches Federblech (4) aufweist, welches federnd vorgespannt ist und welches in der Schließstellung abdichtend auf der Anschlagkante (8) aufliegt. **dadurch gekennzeichnet, dass** das Federblech (4) beidseitig entlang seiner Schwenkachse eine erste und eine zweite Federblechhälfte (4a, b) aufweist, die im wesentlichen halbkreisförmig sind und unterschiedliche Radien aufweisen.

2. Armatur nach Anspruch 1,
**dadurch gekennzeichnet,**
**dass** das Federblech (4) anströmseitig und das biegesteife Element (7) abströmseitig angeordnet ist.

3. Armatur nach Anspruch 1 oder 2,
**dadurch gekennzeichnet,**
**dass** das biegesteife Element (7) als Klappenscheibe ausgebildet ist.

4. Armatur nach einem der Ansprüche 1 bis 3,
**dadurch gekennzeichnet,**
**dass** die Spindel (3) in Strömungsrichtung beabstandet zu der von dem Federblech (4) und der Anschlagkante (8) gebildeten Dichtebene radial durch den Durchflusskörper (1) hindurch geführt wird.

5. Armatur nach einem der Ansprüche 1 bis 4,
**dadurch gekennzeichnet,**
**dass** die Spindel (3) mit der Klappe (2) mittels eines Distanzstückes (10) verbunden ist.

6. Armatur nach einem der Ansprüche 1 bis 5,
**dadurch gekennzeichnet,**
**dass** die Klappe (2) hinsichtlich der Durchflussöffnung (6) mittels mindestens einem Zentrierstiftes (12) zentriert wird, der in die Klappe (2) und die Spindel (3) und ggf. in das Distanzstück (10) eingesteckt wird.

7. Armatur nach einem der Ansprüche 1 bis 6,
**dadurch gekennzeichnet,**
**dass** das Federblech (4) wenigstens einseitig umfangseitig in Richtung auf die Anschlagkante abgewinkelt ist.

8. Armatur nach einem der Ansprüche 1 bis 7,
**dadurch gekennzeichnet,**
**dass** das Federblech (4) zwischen den beiden Federblechhälften (4a, b) jeweils einen Schlitz (5) aufweist, der vorzugsweise in einer Bohrung (5a) endet.

## Claims

1. Valve for isolating or adjusting the volume flow of a gaseous or liquid medium featuring a disc (2), which can be rotated between an open position and a closed position by means of a spindle (3), and a flow body (1) which limits a flow opening (6) and which has at least one stop edge (8) on which said disc rests in the closed position, with the disc (2) comprising a rigid element (7) and an elastic spring leaf (4) which is pretensioned to be resilient and which, in the closed position, rests on the stop edge (8) performing a sealing function,
**characterised in that**
the spring leaf (4) has a first and second spring leaf half (4a, b) on both sides along its rotation axis, basically being of semi-circular shape and having different radii.

2. Valve according to claim 1,
**characterised in that**
the spring leaf (4) is installed on the oncoming flow side and the rigid element (7) on the flow-off side.

3. Valve according to claim 1 or 2,
**characterised in that**
the rigid element (7) is designed as a disc blade.

4. Valve according to any one of claims 1 to 3,
**characterised in that**
the spindle (3) is arranged radially in flow direction through the flow body (1) at a distance to the sealing area formed by the spring leaf (4) and the stop edge (8).

5. Valve according to any one of claims 1 to 4,
**characterised in that**
the spindle (3) is connected to the disc (2) by means of a spacer (10).

6. Valve according to any one of claims 1 to 5,
**characterised in that**
the disc (2) is centred with respect to the flow opening (6) by means of at least one centring pin (12) which is inserted in the disc (2) and the spindle (3) and possibly in the spacer (10).

7. Valve according to any one of claims 1 to 6,
**characterised in that**
the spring leaf (4) is angled towards the stop edge with its circumference at least on one side.

8. Valve according to any one of claims 1 to 7,
**characterised in that**
the spring leaf (4) has a slot (5) between the two spring leaf halves (4a, b), which preferably ends in a bore hole (5a).

## Revendications

1. Robinet pour arrêter ou ajuster le débit volumique d'un fluide gazeux ou liquide avec un clapet (2) qui, à l'aide d'un tige (3), peut être balancé entre une position ouverte et une position fermée et avec un corps d'écoulement (1) délimitant une ouverture d'écoulement (6) et présentant au moins une arête (8) sur laquelle repose le clapet en position fermée, ledit clapet (2) présentant un élément inflexible (7) et une tôle élastique à ressorts (4) qui est prétendue et qui, en position fermée, repose de manière étanche sur l'arête (8),
**caractérisé par le fait**
**que** la tôle élastique à ressorts (4) présente de deux côtés le long de son axe de balancement une première et une deuxième moitiés de tôle élastique à ressorts (4a, b) qui sont essentiellement conçues sous forme semi-circulaire et qui présentent des rayons différents.

2. Robinet suivant la revendication 1,
**caractérisé par le fait**
**que** la tôle élastique à ressorts (4) est disposée à l'amont de l'écoulement et que l'élément inflexible (7) est disposé à l'aval de l'écoulement.

3. Robinet suivant l'une des revendications 1 ou 2,
**caractérisé par le fait**
**que** l'élément inflexible (7) est conçu sous forme de disque à clapet.

4. Robinet suivant l'une des revendications 1 à 3,
**caractérisé par le fait**
**que** le tige (3) passe radialement en direction de l'écoulement à travers du corps d'écoulement (1), distant de la surface d'étanchéité formée par la tôle élastique à ressorts (4) et l'arête (8).

5. Robinet suivant l'une des revendications 1 à 4,
**caractérisé par le fait**
**que** le tige (3) est lié au clapet (2) à l'aide d'une pièce d'écartement (10).

6. Robinet suivant l'une des revendications 1 à 5,
**caractérisé par le fait**
**que** le clapet (2) est centré par rapport à l'ouverture d'écoulement (6) à l'aide d'au moins une cheville de centrage (12) introduite dans le clapet (2) et le tige (3) et, le cas échéant, la pièce d'écartement (10).

7. Robinet suivant l'une des revendications 1 à 6,
**caractérisé par le fait**
**que** la tôle élastique à ressorts (4) est coudée au moins d'un côté de manière circonférentielle en direction de l'arête.

8. Robinet suivant l'une des revendications 1 à 7,
**caractérisé par le fait**
**que** la tôle élastique à ressorts (4) présente entre les deux moitiés de tôle élastique à ressorts (4a, b) à chaque fois une fente (5) se terminant de préférence dans un perçage (5a).
